# EUROPEAN PATENT APPLICATION

(11) **EP 1 204 045 A1**
(43) Date of publication of application: **08.05.2002**
(21) Application number: 01906235.5
(22) Date of filing: 23.02.2001
(51) Int. Cl.: G06F 17/30, G06F 13/00

(54) **WEB PAGE PROVIDING METHOD AND WEB PAGE PROVIDING APPARATUS**

(30) Priority: 23.02.2000 JP 2000046396
(71) Applicant: SEIKO EPSON CORPORATION, Tokyo 160-0811 (JP)
(72) Inventor: Haji, Hisao, Suwa-Shi, Nagano 392-8502 (JP); Goto, Eriko, Suwa-Shi, Nagano 392-8502 (JP); Shibusawa, Yasuo, Suwa-Shi, Nagano 392-8502 (JP); Oshima, Yasuhiro, Suwa-Shi, Nagano 392-8502 (JP)
(74) Representative: Sturt, Clifford Mark
(86) International application number: JP0101334
(87) International publication number: WO0163475

(57) **Abstract**

A Web page 10 that is transmitted from a server to a receiving terminal operated by a user displays selection lists 11 for selecting parts or the like by the user. Further, a starting button 12 for displaying a recommended plan is displayed on the Web page 10. By clicking the starting button 12, a selection pattern display program 13 is started. As a result, a result of selection of a predetermined pattern prepared beforehand by a Web page provider is displayed. Accordingly, the operation to select a recommended plan or a plan similar to the recommended plan can be simplified. Also, selection errors by the user can be prevented.

## Description

### TECHNICAL FIELED OF THE INVENTION

The present invention relates to a method for providing a Web page and an apparatus for providing a Web page in apparatuses or the like that receive orders and sell goods through networks.

### PRIOR ART

The use of apparatuses for receiving orders and selling goods through a wide area network such as the Internet is rapidly becoming popular. These apparatuses have the advantage in which distribution costs can be reduced and good quality products can be provided at low prices. The apparatuses of this type may use Web pages to provide abundant and detailed product information to the users, and can receive orders including options from the users. Orders by the users are transmitted from receiving terminals operated by the users to the server. An operator who is in charge of receiving orders may prepare quotations according to the contents of the orders and arrange for products.

However, the conventional technique described above has the following problems that need to be solved.

In an apparatus for receiving orders and selling products that uses the Internet, a guidance for products as well as a group of selection lists listing products to be selected (generally called "drop-down lists") by the users are displayed on Web pages that are provided from the server to the users.

For example, in the case of receiving orders of and selling personal computers, numerous selection lists to select types of parts such as CPUs, memories, displays, mice, keyboards, and CD-ROM drives are displayed on a Web page. The user must select types of at least some of the parts he desires, and places an order. Some users may prefer selecting types of parts one by one, and other users may be reluctant to do such work. Also, when the users do not have sufficient knowledge about the products and parts, they may make wrong selections. As a result, after receiving requests for quotation or orders, the server side may often send notices of the wrong selections to the users. This is a hindrance to a smooth operation of receiving orders. The problem may not necessarily be limited to the operation of receiving orders and selling products, and the same problem may occur when the users are given options to make their own selections.

### DESCRIPTION OF THE INVENTION

The present invention employs the following compositions to solve the problems described above.

### <Composition 1>

A method is provided for providing a Web page to be transmitted from a server to a receiving terminal operated by a user through a network. The method for providing a Web page is characterized in that a selection pattern display program is added to a Web page that displays a group of selection lists to be selected by the user to control the group of selection lists in such a manner to display a result of selection of a predetermined selection pattern prepared in advance by a Web page provider.

The server and the receiving terminal are connected to the network. The network may be of any type. The receiving terminal receives Web pages from the server. The user is a person who uses Web pages at his receiving terminal. The selection list to be selected by the user is an object having a function to select and display one of two or more selection items on a Web page. The Web page may display a plurality of selection lists of this type. The user can make selections of selection items needed among all of the selection lists and use the result thereof. Web pages may be used for any purposes, including, for example, ordering products (including services and plans), invoicing, and notifying other information.

A provider that provides Web pages prepares a predetermined selection pattern beforehand. The selection pattern includes, for example, a recommended plan for selected products or a combination of products. The predetermined selection pattern may be provided in a plurality. The selection pattern display program controls the group of selection lists on the Web page and modifies the display as though the user has selected the predetermined selection pattern. The selection pattern display program is added to the Web page at the server side.

As a result, when the user selects a recommended plan or a plan similar to the recommended plan, the selection operation becomes easier. Furthermore, selection errors by the user may be prevented.

In addition, after controlling the group of selection lists on the Web page and modifying its display as described above, the user can modify a part of the selected list into a pattern of the user's preference. Therefore, the user has a greater flexibility compared to a Web page that merely lists catalogs of recommended plans, and therefore is particularly effective when the user wants to decide his own specification.

### <Composition 2>

In the method for providing a Web page described in Composition 1, the method for providing a Web page is characterized in that a selection pattern display program is added to the Web page to control the group of selection lists in such a manner to display a result of selection of one of two or more predetermined selection patterns.

Multiple types of selection patterns may be provided, and any one of them may be displayed.

### <Composition 3>

In the method for providing a Web page described in Composition 1 or Composition 2, the method for providing a Web page is characterized in that a starting button for starting the selection pattern display program by operation of the user is added to the Web page.

The user can select the starting button on the Web page to display the predetermined selection pattern at any time. When there are a plurality of recommended plans, a plurality of starting buttons may be prepared, or one starting button may be used to switch among displays. Also, the starting button may be displayed on a page different from the Web page that shows the selection lists. By preparing recommended plans that are close to requirements and conditions of the user, then the selection by the user can be further simplified.

### <Composition 4>

In the method for providing a Web page described in Composition 3, the method for providing a Web page is characterized in that the starting button shows contents of a selection pattern.

In particular, when there are a plurality of selection patterns, each starting button may preferably display data that indicates contents of each of the selection patterns. As a result, the user can select a selection pattern that is close to their own requirements and display the same.

### <Composition 5>

In the method for providing a Web page described in Composition 1 or Composition 2, the method for providing a Web page is characterized in that, on a Web page displaying a result of selection of the predetermined selection pattern as a result of execution of the selection pattern display program, a group of selection items is rendered in a manner that other selection items can be freely selected later.

Therefore, the user does not start the selection from scratch, but rather starts from a prepared selection pattern, namely a recommended plan, and modifies the entirety or part thereof one by one to find desired selection items.

In this manner, the selection work by the user can be assisted. The group of selection lists that enables the user to freely select other selection items at a later stage may be displayed on the entire Web page or a part thereof.

### <Composition 6>

In the method for providing a Web page described in any one of Composition 1 through Composition 5, the method for providing a Web page is characterized in that the selection pattern display program is generated using a latest data in a database and added to the Web page immediately before a Web page is transmitted from the server to a receiving terminal.

The recommended plan may preferably be generated based on the latest data. This is realized by generating a selection pattern display program using the latest data included in the database at the server side immediately before a Web page is transmitted from the server.

The database normally includes a variety of new and old data. In this respect, the latest data is used in this example. The latest data may preferably include inventory data and price data. As a result, price and shipping can be optimized by the recommended plan.

### <Composition 7>

In the method for providing a Web page described in any one of Composition 1 through Composition 6, the method for providing a Web page is characterized in that the Web page displays a group of selection lists of products for receiving product orders from the user.

The products include services. Patterns of receiving orders may be narrowed down by recommended plans, such that management of receiving orders, preparations and cost estimates can be more readily conducted. Therefore, this is particularly effective in transactions in receiving orders of products.

### <Composition 8>

An apparatus is provided for providing a Web page, which displays a group of selection lists to be selected by the user, to be transmitted from a server to a receiving terminal operated by a user through a network. The apparatus for providing a Web page is characterized in that a selection pattern display program adding section is provided on the server side that performs a process of adding a selection pattern display program to the Web page to control the group of selection lists in such a manner that a result of selection of a predetermined selection pattern prepared in advance by a Web page provider is displayed.

The above is an apparatus to realize the method of Composition 1. The server side is a side that provides Web pages. The selection pattern display program adding section may be provided inside the server, or the selection pattern display program adding section maybe provided in another computer for providing Web pages that is connected to the server.

### <Composition 9>

In the apparatus for providing a Web page described in Composition 8, the apparatus for providing a Web page is characterized in having a database that stores information to obtain predetermined selection patterns, wherein the display program adding section generates the selection pattern display program using the database and adds the same to the Web page immediately before a Web page is provided from the server to the receiving terminal.

The above is an apparatus to realize the method of Composition 6.

### <Composition 10>

For providing a Web page that displays a group of selection lists to be selected by the user from a server to a receiving terminal operated by a user through a network, a computer readable storage media stores a program for executing a process of adding a selection pattern display program to the Web page to control the group of selection lists in such a manner to display a result of selection of a predetermined selection pattern prepared in advance by a Web page provider.

The above is a program for generating a Web page provided on the server side to realize the method of Composition 5, which is stored in a computer readable storage media such as a CD-ROM. The program can be installed and operated on a computer that provides Web pages on the server side.

### <Composition 11>

A Web page to be transmitted from a server to a receiving terminal operated by a user through a network, which displays a group of selection lists to be selected by the user, the Web page is characterized in having a selection pattern display program added thereto to control the group of selection lists in such a manner to display a result of selection of a predetermined selection pattern prepared in advance by a Web page provider.

The above is a Web page to realize Composition 1.

### <Composition 12>

In the Web page described in Composition 11, the Web page is characterized in that the Web page shows a result of selection of one of two or more selection patterns.

The above is a Web page to realize Composition 2. Any selection method can be used, and selection is not necessarily conducted on the Web page.

### <Composition 13>

In the Web page described in Composition 11 or Composition 12, the Web page is characterized in that the Web page shows a starting button for starting the selection pattern display program by operation of the user.

The above is a Web page to realize Composition 3.

### <Composition 14>

In the Web page described in Composition 13, the Web page is characterized in that the starting button shows contents of the selection pattern.

The above is a Web page to realize Composition 4.

### <Composition 15>

In the Web page described in Composition 11 or Composition 12, the Web page is characterized in that, after the selection pattern display program is executed to show a result of selection of a predetermined selection pattern, a group of selection lists enables free selection of other selection items.

The above is a Web page to realize Composition 5.

### BRIEF DESCRIPTION OF THE DRAWINGS

Fig. 1 shows an illustration to describe a structure of a Web page in accordance with the present invention.
Fig. 2 shows a block diagram of an example embodiment of an apparatus suitable for implementing the present invention.
Fig. 3 is an illustration to describe contents of a selection pattern display , program and operations at a server side and a receiving terminal side.
Fig. 4 shows a flowchart of an operation on the receiving terminal side.

### EMBODIMENT OF THE PRESENT INVENTION IN BEST MODE

Embodiments of the present invention are described below.

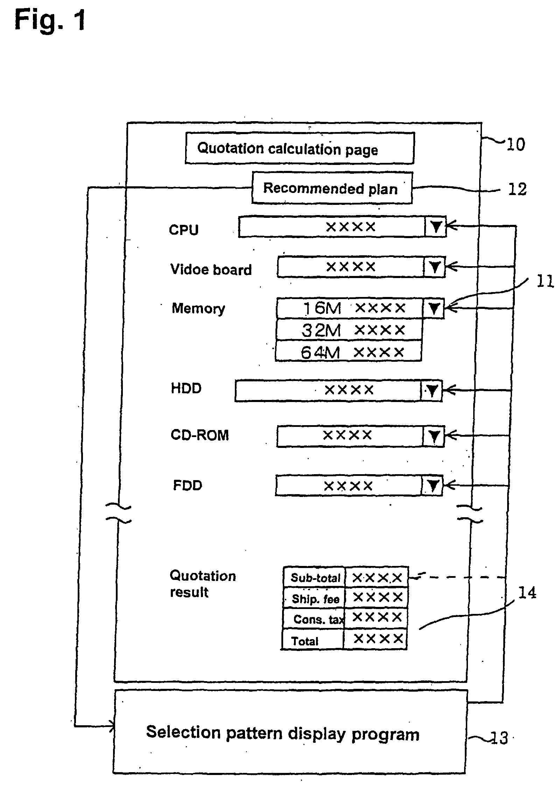

Fig. 1 is an illustration to describe a structure of a Web page in accordance with the present invention.

The Web page 10 shown in the figure is provided to a receiving terminal that is operated by the user, when, for example, personal computers are sold through the Internet. The Web page 10 displays selection lists 11 for selecting types of parts of a personal computer in the number corresponding to the number of the parts.

Furthermore, the Web page 10 displays a starting button 12 that is named as a "recommendation button". A selection pattern display program 13 written in, for example, JavaScript (i.e., an object-oriented script language developed by Netscape) is added in HTML (hypertext markup language) data that controls the display of the Web page 10.

The selection pattern display program 13 has a function to control the selection lists 11 in such a manner to display a result of selection of a predetermined selection pattern (which is called a "recommended plan", in this example) prepared by a Web page provider.

In addition, the Web page 10 includes a quotation result display 14 that shows a result of quotation of product prices based on the result of selection.

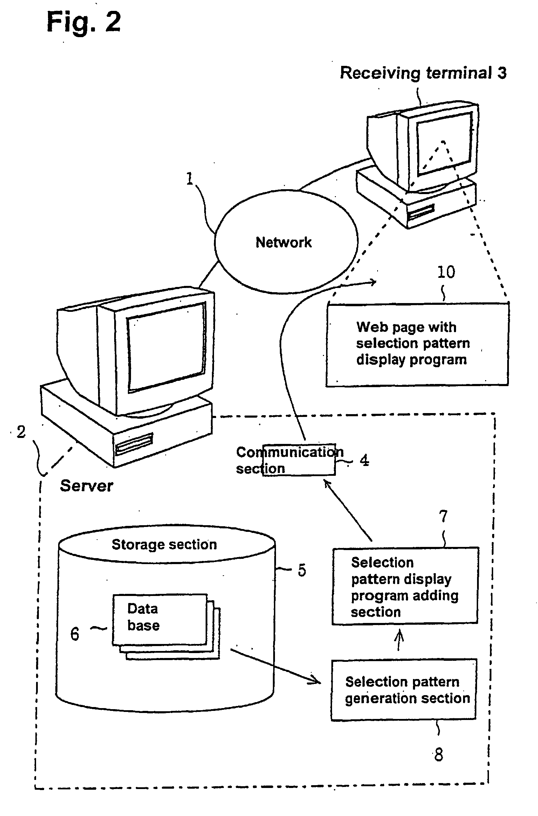

Fig. 2 shows a block diagram of an apparatus in accordance with an embodiment that is suitable for implementing the present invention.

A network 1 shown in the figure is the Internet. Although the description is made with reference to the Internet as an example, the present invention is also applicable to telephone networks, Intranets and other networks. The network 1 is connected to a server 2 and a receiving terminal 3. In this example, the description is made with respect to an apparatus that is used for receiving orders of and selling personal computers and their peripheral equipment through the Internet.

The apparatus provides a Web page 10 through the network 1 from the server to a receiving terminal that is operated by the user, which can also be used for calculation of quotations for personal computers and peripheral equipment therefor to be sold. The server 2 is equipped with a communication section 4, a storage section 5, a selection pattern display program adding section 7 and a selection pattern generation section 8. A database 6 is stored in the storage section 5.

With the apparatus shown in Fig. 2, when the Web page 10 is transmitted to the user, the user selects parts of a personal computer while displaying the Web page 10 shown in Fig. 1 on the receiving terminal 3. In one embodiment, for example, when a type of memory shown in the Web page 10 of Fig. 1 is selected, a downwardly pointed arrow mark at the selection list 11 is clicked. As a result, as shown in the figure, a list of all of the selection items of memories is shown on the display screen.

For example, when a 16MB memory is desired among the memories, a corresponding one of the selection items is clicked to set a state in which the selection item is selected.

Similar operations are conducted for other parts. There are parts other than those shown in the figure. When parts necessary for placement of an order of a personal computer are selected, an order button or the like (not shown) is clicked to make a formal quotation request or a placement of order.

In this example, a quotation computation program that stores unit prices of the selected parts is added to the Web page 10, such that a result of quotation calculation is displayed at the same time when the parts are selected. Any other method can be used. For example, in one method, when a quotation request button (not shown) is depressed, information for the selected parts is notified to the server, and the server returns a quotation calculation result to the receiving terminal.

When the user receives a Web page such as the one shown in Fig. 1, and he does not want to do the selection tasks for selecting all of the parts, the starting button 12 indicated as the "recommended plan" is clicked to start a selection pattern display program. As a result, selection items that are prepared according to the recommended plan are displayed at once in the respective selection lists. The recommended plan is prepared by the provider that provides the Web pages.

Therefore, the Web page provider can prepare a combination pattern that combines well-balanced parts, for example, a selection pattern for parts suitable for a desktop type personal computer having standard functions at a relatively low price, and can recommend the same to the user.

Also, several different selection patterns, including a selection pattern for users whose main object is to use mail and the Internet, a selection pattern for users whose main object is to do image processing, a selection pattern for business users who connect to a LAN (local area network) for the use thereof, and the like, may be prepared, and the user can freely designate one of them.

It is widely practiced to provide ordinary Web pages displaying recommended plans of the type described above. In other words, it is nothing more than merely displaying catalogs of personal computers having fixed specifications. However, when a large variety of selectable parts are available, the degree of freedom in selection by the user is restricted. In accordance with the present invention, the selection pattern display program 13 controls the selection lists 11 on the Web page 10 as though the user has actually selected the recommended plan.

Therefore, the user can freely modify a part thereof and re-select preferred parts later, with the result that the user's operation to select a plan similar to the recommended plan can be simplified. Also, selection errors by the user can be prevented. Also, on the side of the Web page providers, receiving orders containing error selections can be prevented. Furthermore, patterns of receiving orders may be narrowed down by recommended plans, such that management of receiving orders, preparations and cost estimates can be more readily conducted. When there are a plurality of recommended plans, a plurality of starting buttons may be provided, or one starting button may be used to successively switch to a next plan at each time the starting button is clicked. Also, the starting button may be displayed on a page different from the Web page that shows the selection lists.

Referring to Fig. 2, the server is equipped with a selection pattern display program adding section 7 that adds a selection pattern display program 13 having the function described above to the Web page 10.

Data representative of the selection patterns may be stored as it is in the storage section 5. However, in this example, a selection pattern display program is generated using the latest data in the database 6 immediately before transmitting the Web page 10 from the server 2 to the receiving terminal 3. This is done because the recommended plan can be timely optimized in view of inventory and prices of the parts. The selection pattern generation section 8 accesses the database 6 at a predetermined timing to generate the selection pattern data. The timing may be, for example, once a day, or at each time when the database is renewed.

An operation of the apparatus of the present invention is described below in a greater detail with reference to a flowchart.

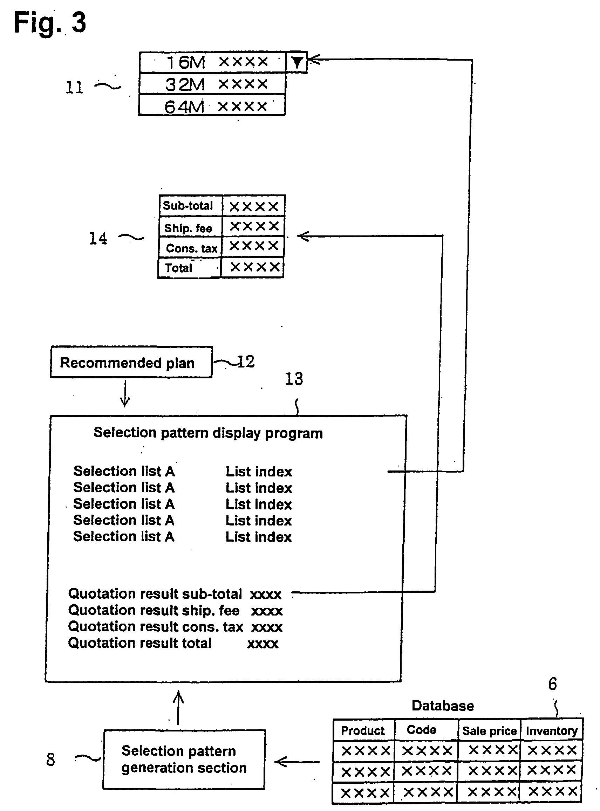

Fig. 3 is an illustration to describe contents of a selection pattern display program and operations at the server side and the receiving terminal side.

The database 6 includes information for, for example, names and product codes of products (corresponding to parts of a personal computer), sale prices, and inventory . The selection pattern generation section 8 generates a selection pattern, that is an optimized recommended plan, by referring to the database 6.

For example, in the case of a standard personal computer, the database 6 is referred to find a pattern including a CPU having an operation speed of 500 MHz, a memory of 64 MB, a HHD of 4 GB and the like to check the inventory of the corresponding parts. When the inventory is very low, the selection items are changed to replaceable parts that are sufficiently stocked. When two parts having the same function are present, a cheaper one is selected.

The selection pattern display program 13 may retain, for example, parameters called list indexes in the number corresponding to the selection lists. The list indexes designate which selection items in the respective selection lists are to be selected.

In this example, the selection pattern generation section 8 controls the display of results of quotations.

When a selection pattern corresponding to a recommended plan is displayed, the quotation calculation program can be operated to automatically display a quotation result. However, in the example shown here, the server side calculates them for recommended plans in advance. The selection pattern display program 13 retains data for the calculation results of quotations, and when the starting button 12 is clicked, displays a selection pattern corresponding to a recommended plan on the selection lists 11 and at the same time renews contents of the quotation result display 14.

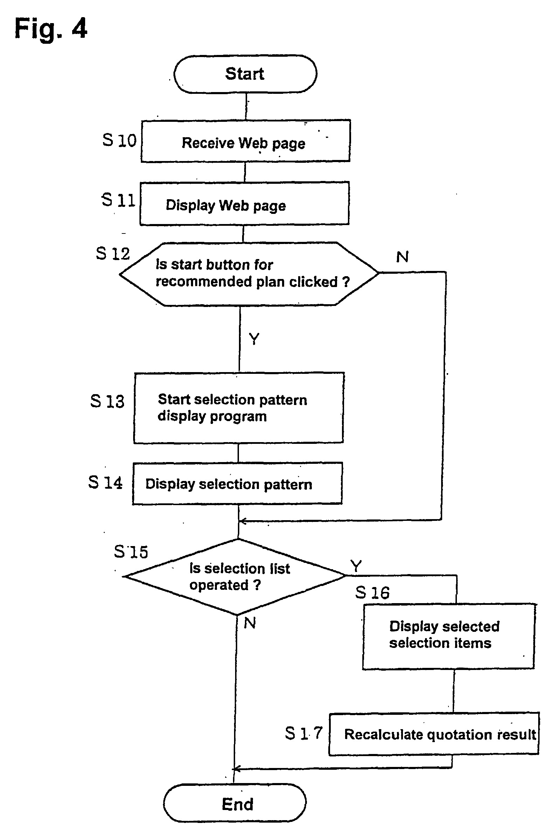

Fig. 4 shows a flowchart of an example of an operation on the receiving terminal 3 side.

First, in step S10, the receiving terminal receives a Web page. Then, the content thereof is displayed on a display (step S11). In step S12, an observation is made whether or not the starting button 12 for displaying a recommended plan on the Web page 10 is clicked. When the starting button 12 is clicked, the selection pattern display program 13 is started in the manner described above (step S13), and the selection pattern is displayed (step S14).

In both of the cases when the selection pattern is displayed by clicking the starting button 12 and when the starting button 12 is not clicked, the process advances to step S15 and the operation is put in a standby state in which an operation to select a list by the user is awaited. When the user operates to select a list, selected items are displayed in step S16, and the quotation result is recalculated in step S17. When the user accepts the recommended plan as it is, the operation of selecting parts is completed. Thereafter, for example, the user may click a quotation request button or an order button (not shown) to return the selected result to the server side.

It is noted that the Web page described above displays the group of selection items of products for receiving product orders from the user. In addition, the Web page can also be used to select a variety of services. For example, in the case of travel plans, a Web page that includes selection items, such as, for example, selection of transportation, selection of hotels, selection of meals and selection of optional tours is provided, whereby the same effects described above can be obtained.

A Web page may be used to introduce abundant product lists, such that the user can freely select preferred products among the listed products. As a result, one Web page can provide products that broadly meet the needs of the users.

For example, when parts of a personal computer and lists of options are introduced so that they can be freely selected, the number of combinations thereof may amount to several tens of thousands. On the other hand, the users may be confused by such a large number of selection items. In accordance with the present invention, combinations of items that are assumed to be desired by the users or combinations close thereto can be prepared beforehand from the several tens of thousands of the selection items.

Accordingly, the user does not start selection from scratch, but rather starts selection from a recommended plan and changes the entirety or a part thereof to find desired selection items.

In this manner, the selection task by the user is assisted. Also, unbalanced combinations can be prevented better when recommended plans are modified to make selection. Furthermore, the Web page provider may survey patterns of the users in advance and prepare a plurality of different recommended plans. For example, several recommended plans may preferably be prepared for users of different tastes due to different age generations, sexes or the like.

Several types of grades may be prepared based on price ranges, and recommended plans may be prepared based on the different grades. Also, in this case, it would be more convenient if the starting button to start a program to display recommended plans may contain a display of contents that helps the user to determine which one of the plans is appropriate to the user himself.

It is noted that the functional blocks shown in Fig. 2 may be formed from individual program modules, or may be formed from an integrated program module. Also, all of the functional blocks or a part thereof may be formed from hardware with logic circuits. Also, each of the program modules may be operated by implementing the same in an existing application program or may be operated as an independent program.

A computer program that realizes the invention described above may be stored in a computer readable storage medium such as, a CD-ROM, and can be installed for use. Also, the computer program can be downloaded onto a computer memory through the network for use.

## Claims

1. A method for providing a Web page to be transmitted through a network from a server to a receiving terminal operated by a user, the method for providing a Web page being **characterized in that** a selection pattern display program is added to a Web page that displays a group of selection lists to be selected by the user to control the group of selection lists in such a manner that a result of selection of a predetermined selection pattern prepared in advance by a Web page provider is displayed.

2. A method for providing a Web page according to claim 1, wherein a selection pattern display program is added to the Web page to control the group of selection lists in such a manner to display a result of selection of one of two or more predetermined selection patterns.

3. A method for providing a Web page according to claim 1 or claim 2, wherein a starting button for starting the selection pattern display program by operation of the user is added to the Web page.

4. A method for providing a Web page according to claim 3, wherein the starting button shows a content of a selection pattern.

5. A method for providing a Web page according to claim 1 or claim 2, wherein, on a Web page displaying a result of selection of the predetermined selection pattern as a result of execution of the selection pattern display program, a group of selection items is rendered in a manner that other selection items can be freely selected later.

6. A method for providing a Web page according to any one of claim 1 through claim 5, wherein the selection pattern display program is generated using the latest data in a database and added to the Web page immediately before a Web page is transmitted from the server to a receiving terminal.

7. A method for providing a Web page according to any one of claim 1 through claim 6, wherein the Web page displays a group of selection lists of products for receiving product orders from the user.

8. An apparatus for providing a Web page, which displays a group of selection lists to be selected by a user, to be transmitted from a server to a receiving terminal operated by the user through a network, the apparatus being **characterized in that** a selection pattern display program adding section is provided on the server side to perform a process of adding a selection pattern display program to the Web page to control the group of selection lists in such a manner that a result of selection of a predetermined selection pattern prepared in advance by a Web page provider is displayed.

9. An apparatus for providing a Web page according to claim 8, comprising a database that stores information to obtain predetermined selection patterns, wherein the display program adding section generates the selection pattern display program using the database and adds the selection pattern display program to the Web page immediately before the Web page is provided from the server to the receiving terminal.

10. A computer readable storage media that stores a program for executing, when providing a Web page that displays a group of selection lists to be selected by a user from a server to a receiving terminal operated by the user through a network, a process of adding a selection pattern display program to the Web page to control the group of selection lists in such a manner to display a result of selection of a predetermined selection pattern prepared in advance by a Web page provider.

11. A Web page to be transmitted through a network from a server to a receiving terminal operated by a user, which displays a group of selection lists to be selected by the user, the Web page **characterized by** comprising a selection pattern display program added thereto to control the group of selection lists in such a manner to display a result of selection of a predetermined selection pattern prepared in advance by a Web page provider.

12. A Web page according to claim 11, wherein the Web page shows a result of selection of one of two or more selection patterns.

13. A Web page according to claim 11 or claim 12, wherein the Web page shows a starting button for starting the selection pattern display program by operation of the user.

14. A Web page according to claim 13, wherein the starting button shows contents of the selection pattern.

15. A Web page according to claim 11 or claim 12, wherein, after the selection pattern display program is executed to show a result of selection of a predetermined selection pattern, a group of selection lists enables free selection of other selection items.
